Europäisches Patentamt

European Patent Office

Office européen des brevets

(11) Publication number: **0 516 113 A2**

## EUROPEAN PATENT APPLICATION

(21) Application number: 92109011.4

(22) Date of filing: 29.05.92

(51) Int. Cl.⁵: **G01P 1/00**

(30) Priority: 31.05.91 US 708524
31.05.91 US 708602

(43) Date of publication of application:
**02.12.92 Bulletin 92/49**

(84) Designated Contracting States:
**DE ES FR**

(71) Applicant: **PPG INDUSTRIES, INC.**
**One PPG Place**
**Pittsburgh Pennsylvania 15272(US)**

(72) Inventor: **Brower, Jeffrey Curtis**
**Rural Route 3, Box 286M**
**Paola, Kansas 66071(US)**
Inventor: **Lester, David Allen**
**726 South Brighton**
**Kansas City, Missouri 64124(US)**
Inventor: **Williams, Stuart Philip**
**8833 Outlook Drive**
**Overland Park, Kansas 66207(US)**
Inventor: **Waterhouse, Paul Ingram**
**2145 Governors Road**
**Copetown, Ontario L0R 1J0(CA)**

(74) Representative: **Sternagel, Hans-Günther, Dr.**
**et al**
**Patentanwälte Dr. Michael Hann, Dr. H.-G.**
**Sternagel, Dr. H. Dörries, Sander Aue 30**
**W-5060 Bergisch Gladbach 2(DE)**

(54) **Disk mounting arrangement and wireless angular velocity detector.**

(57) A mounting device is secured about a rotating shaft such that it rotates along with the shaft. The device includes a plurality of interconnecting members that, when assembled, defines a central opening to receive the rotating shaft. An elastomeric grommet is positioned between the shaft and the members at the central opening to securely engage the shaft with the device and ensure that there is no relative rotational movement therebetween.

The device may include accessories attached thereto such as reflectors, lights, and transmitters. The transmitter may be part of a wireless velocity detector for a bicycle which includes a coil mounted on the wheel hub of the bicycle which generates a rotating magnetic field as the wheel rotates, a receiver mounted on the handlebars that includes a pair of coils that sense variations in the strength of the rotating field as the bicycle moves and generates signals in response to the field variations and a microprocessor which converts the signals into information related to the movement of the bicycle, e.g. speed and distance. A liquid crystal display is used to display the information to the cyclist.

## Background of the Invention

### 1. Field of the Invention

This invention relates to a mounting device and more particularly a device to be mounted on the wheel hub of a bicycle, and also to a device for displaying the velocity and other related information of a moving vehicle, and more particularly a wireless velocity detector for use on a bicycle, of which the mounting device may be a part.

### 2. Technical Considerations

Cycling is a recreational and competitive sport enjoyed throughout the world. Often times, cyclists mount accessories such as horns, lights, mirrors or reflectors on various portions of the bicycles, such as the handlebar and/or frame. Another commonly installed accessory is a speedometer which generally includes a display unit mounted on the handlebar of the bicycle and a rotation detector generally mounted on the bicycle frame to detect rotation of the bicycle wheel and/or pedal crank. In addition, certain accessories such as reflectors and the wheel rotation detector portion of a speedometer are mounted on and rotate with the bicycle wheel. Mounting these accessories on the bicycle may be cumbersome, requiring screwdrivers and metal bands to secure the accessory in place. Others may require special tools and partial disassembly of the bicycle. It would be advantageous to provide a simple mounting arrangement to mount selected bicycle accessories.

The data display for a speedometer is generally wired directly to the detector to receive a signal from the detector and convert it into various forms of information, such as the bicycle velocity, maximum velocity and distance traveled. This information can be displayed for view by the cyclist on a needle-type gauge or liquid crystal display (LCD). Some units incorporate microprocessors to generate additional information for the cyclist, such as elapsed time and average velocity. In addition, the information can be displayed on the LCD either in sequence or the rider may manually select the type of information to be displayed.

Because the detector and display are normally interconnected by a wire, the connecting wire must be directed along and attached to portions of the bicycle frame. It would be advantageous to be able to send the signal from the detector directly to the data display without the need of an interconnecting wire.

## Summary of the Invention

The present invention provides a device to be mounted on a rotating shaft, e.g. about the hub of a bicycle wheel. The device includes a plurality of interconnecting members which, when assembled about the shaft, define a central opening generally corresponding to the shaft about which the disk member is to be secured. In one embodiment of the invention, two interconnecting members combine to form a generally disk-shaped mounting device. The disk includes a first member with an outwardly extending slot sized at least as wide as the shaft and a second member sized to complement the extending slot. The first and second members include interlocking teeth to secure the members together when the second member is positioned within the slot. An elastomeric grommet is positioned within the opening in the disk to provide snug engagement between the disk and the shaft when the first and second members of the disk are secured to each other with the shaft extending through the opening and captured therein. The snug engagement ensures the rotation of the disk with the shaft. In one particular embodiment of the invention, the opposing sides of the slot are parallel to each other and the second member includes a locking device to prevent removal of the second member from the assembled disk.

The disk member may be used to mount a variety of accessories about the hub of a bicycle wheel. For example, the disk may include a reflector. In addition, the disk may incorporate devices that emit a signal as the wheel rotates. In one embodiment, the disk incorporates a power source and a light which becomes illuminated when the wheel rotates. In another embodiment, the disk includes a series of openings that causes the disk to emit a whistling sound as it rotates along with the wheel.

The disk may also house components that generate electromagnetic pulses or rotating magnetic fields which can be used in combination with a receiver for a wireless bicycle speedometer to record bicycle speed and distance. One embodiment of the present invention provides a wireless detector for monitoring selected information related to a rotating shaft of any structure. In this embodiment of the invention, the detector is a wireless velocity detector and the structure is a moving vehicle, and more particularly a bicycle. A transmitter is located in the disk member mounted on the hub of a wheel of the bicycle and includes a coil that generates a magnetic field when energized. The coil rotates in the plane of rotation of the wheel at a rate directly proportional to the rate of rotation of the wheel. A pair of coils are positioned in a receiver mounted on the bicycle at a location removed from the wheel, preferably on the handlebar. The receiver coils are oriented such that they can sense any variation in the strength of the magnetic field as the field rotates. The receiver coils generate continuous, sinusoidal signals in response to the variations in the field strength and these signals are converted into information related to the movement of the bicycle, e.g. velocity and distance traveled. This information is selectively displayed on a liquid crystal display easily viewed by the cyclist.

In a preferred embodiment of the invention, the receiver coils are oriented 90° relative to each other. These signals are amplified, multiplied together and filtered. The resulting signal is proportional to twice the angular frequency of the wheel mounted transmitter. The signal is then converted to a square wave output which is then sent to a microprocessor which takes the signal and using previously inputted data that is stored in the microprocessor, e.g. bicycle tire circumference, transforms it into elapsed time, speed, and distance.

## Brief Description of the Drawings

Figure 1 is an elevational view of a bicycle incorporating features of the present invention.

Figure 2 is an enlarged plan view of the front bicycle wheel illustrated in Figure 1, showing the mounting device of the present invention secured about the hub of the front wheel, with portions removed for clarity.

Figure 3 is an exploded isometric view of the mounting device shown in Figure 2 wherein the mounting device houses a transmitter.

Figure 4 is a block diagram of the components of the transmitter illustrated in Figure 3.

Figure 5 is an isometric view of an elastomeric grommet used to secure the mounting device shown in Figure 2 about the hub of a bicycle wheel.

Figure 6 is an elevational view of the receiver mounted on the handlebar of a bicycle.

Figure 7 is a cross sectional view taken along line 7-7 of Figure 6.

Figure 8 is an exploded cross sectional view of the receiver shown in Figure 6, with portions removed for clarity.

Figure 9 is a block diagram showing the components of the receiver illustrated in Figure 8.

Figure 10 is a representation of the signal wave envelope monitored in one embodiment of the invention.

Figure 11 is an electrical schematic of a receiver circuit for processing the signal wave envelope shown in Figure 10.

Figure 12 is a representation of the signal wave envelope monitored in a different embodiment of the invention.

Figure 13 is an electrical schematic of a receiver circuit for processing the signal wave envelope shown in Figure 12.

Figures 14 is an exploded isometric view of the alternative embodiment of the mounting device shown in Figure 2 wherein the mounting device houses a light.

Figures 15 and 16 illustrate the device shown in Figures 3 and 14 with alternate accessories that may be used in combination with the present invention, with portions removed for clarity.

Figure 17 is an alternate embodiment of the mounting device.

## Detailed Description of the Invention

The present invention includes a method and apparatus for monitoring selected information related to a rotating shaft of a structure and is presented in combination with the hub of a bicycle wheel in monitoring selected operating parameters of the bicycle such as velocity and distance traveled. However, it should be understood that the present invention can be used to determine the velocity of other types of vehicles based on the rotation of a rotating member as well as monitor other rotational parameters of the shaft, such as rotational velocity and RPMs.

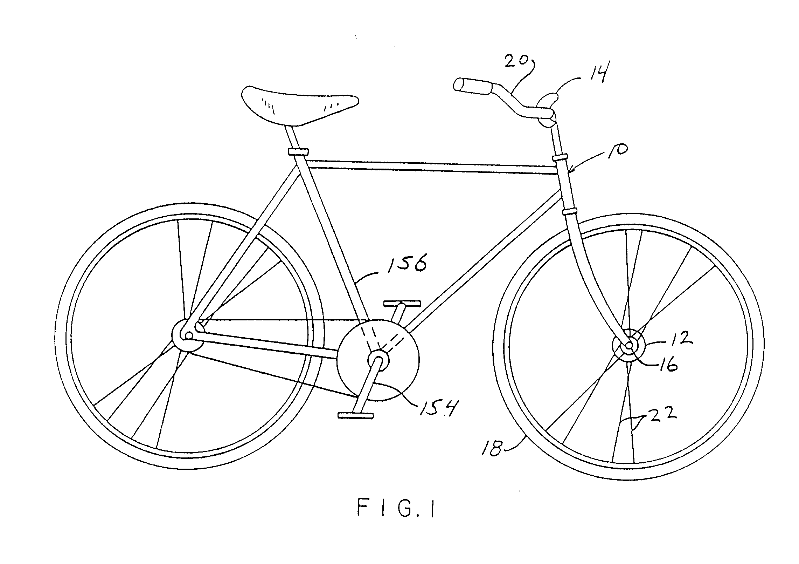

Figure 1 illustrates a bicycle 10 having a mounting device 12 and a receiver 14 incorporating features of the present invention. The mounting device 12 is mounted at the hub 16 of front wheel 18 of the bicycle 10 and the receiver 14 is mounted on the bicycle handlebars 20.

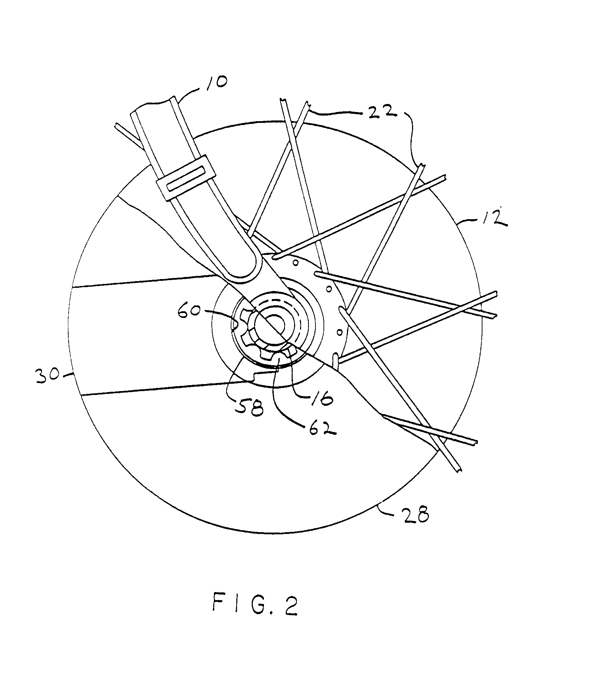

Referring to Figure 2, the mounting device 12 is positioned between the spokes 22 of the bicycle wheel 18 and is secured to the wheel hub 16. In this manner, the mounting device 12 is positioned along the rotational centerline of the wheel 18 as well as in its vertical plane of rotation so that the mounting device 12 has little or no effect on wheel balance. In addition, since the mounting device 12 is positioned between the spokes 22, it is protected from damage due to an object hitting the mounting device 12.

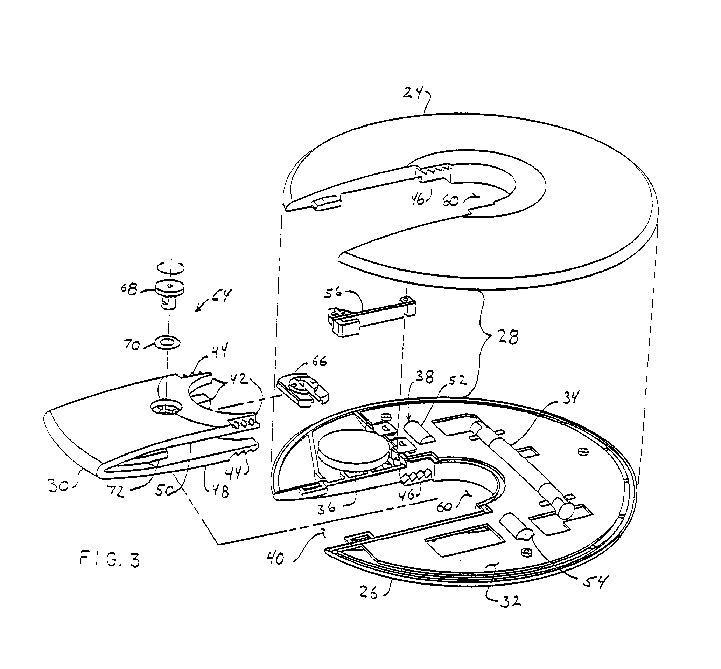

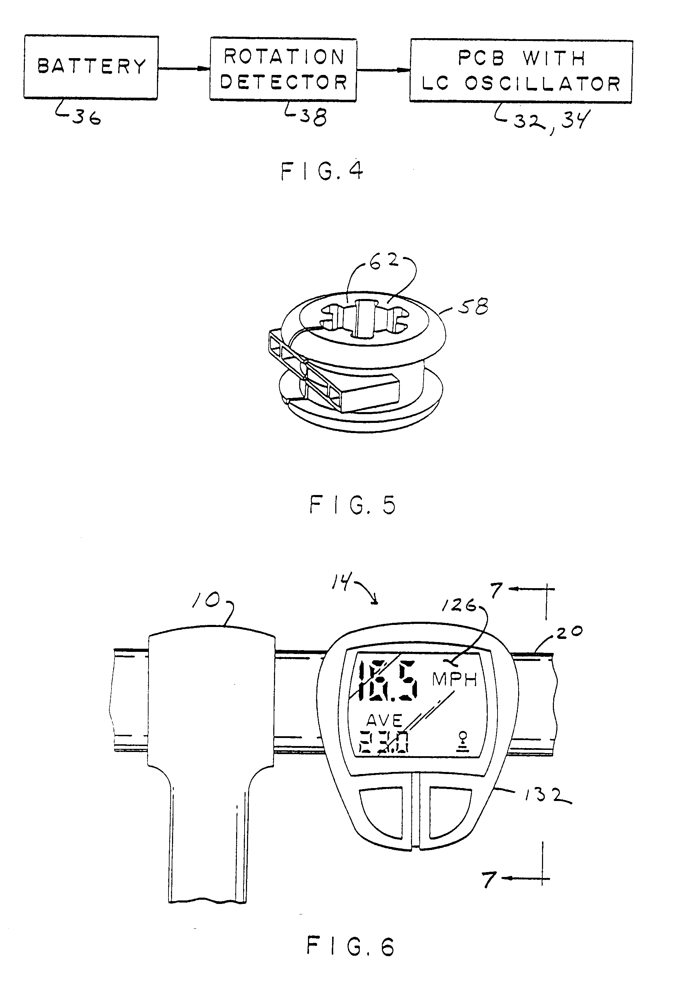

Referring to Figure 3, the mounting device 12 includes first and second disk members 24 and 26 which form the main body 28 of the mounting device 12 and a removable door member 30. It should be appreciated that although the main body 28 as illustrated in Figures 1, 2 and 3 is a disk that is circular in shape, the main body can have other configurations, e.g. oval, rectilinear or any other regular or irregular shape that can be fitted within the spokes 22 of the wheel 18. Although not limiting in the present invention, in the particular embodiment shown in Figure 3, the main body 28 houses a transmitter comprised of a printed circuit board (PCB) assembly 32 which functions as an LC oscillator, as is well known in the art, with a coil 34 operating as the signal radiating element, a power source 36 and a wheel rotation detector 38 (as shown schematically in Figure 4) which energizes the coil 34 when the wheel 18 rotates, as will be discussed later in more detail. The longitudinal axis of the coil 34 is skewed relative to the axis of rotation of the wheel 18, i.e. the two axes do not intersect. In addition, the axes are at right angle to each other, i.e. if the axes where superimposed over each other they would be perpendicular. In the embodiment of the invention illustrated in Figure 3, the coil 34 is positioned such that its longitudinal axis is perpendicular to the radius of the wheel 18. When door member 30 is removed, it provides a slot 40 so that the mounting device 12 can slide into place over the wheel hub 16. The ends 42 of the door member 30 include teeth 44 which engage complementing teeth 46 in the main body 28 of the mounting device 12. The door member 30 is made of a resilient material so that when it is installed into the main body 28, its teeth 44 are biased outwardly toward and interlock with complementing teeth 46. To remove the door member 30, opposing wall portions 48 and 50 are biased towards each other so as to disengage the teeth 44 from the teeth 46 in the main body 28.

The transmitter operates by energizing the coil 34 as the wheel 18 rotates. This energized coil 34 generates a magnetic field which rotates about the wheel hub 16 in the plane of the wheel 18 as the coil 34 rotates end over end, once for each revolution of the wheel 18. The speed of the rotating field, which will be in direct proportion to the speed of the rotating wheel 18, is detected by the receiver 14 as will be discussed later. It should be appreciated that although in the preferred embodiment of the invention the transmitter is located between the spokes 22 of the wheel 18 so that the coil 34 rotates in the plane of the wheel 18, it is contemplated that the transmitter can be mounted at a different location, e.g. next to the wheel 18 outside the spokes 22.

PCB assembly 32 operates as an LC oscillator so that the transmitter operates at a defined frequency to which the receiver 14 can be tuned. As a result, superfluous signals from other potential signal sources can be rejected by the receiver 14. In addition, an oscillating signal is preferred because it requires less power than a sustained signal such as that generated by a permanent magnet or electromagnet. The lower power consumption results in longer battery life. Although not limiting in the present invention, the frequency is preferably within the range of 25,000 to 50,000 Hz. In one particular embodiment of the invention, the transmitter operates at a frequency of approximately 35,000 Hz.

The transmitter achieves long battery life by activating the LC oscillator and energizing the coil 34 only when the wheel 18 is turning. More specifically, in the particular embodiment illustrated in Figures 3 and 4, the rotation detector 38 includes a pair of mercury switches 52 and 54 positioned 180° relative to each other about the rotational axis of the wheel 18. The mercury switches are electrically interconnected to the coil 34 and power source 36 such that when the transmitter is not rotating, as would be the case when the bicycle 10 is not moving, at least one of the mercury switches is open and no current passes from the power source 36 through the coil 34. As the bicycle 10 begins to move and the wheels rotate, centrifugal force will cause the mercury in each of the switches to move outward, thus closing the circuit and allowing current to pass from the power source 36 through the coil 34. As discussed above, the energized coil 34 generates a rotating magnetic field which is detected by the receiver 14. To accommodate the operating condition when the bicycle 10 is moving at such a slow speed that both switches 52 and 54 are not simultaneously closed, the switches 52 and 54 may be incorporated into a sequential charge pass-on circuit, as is well known in the art. Although not limiting in the present invention, in one particular embodiment, the pass-on circuit includes a pair of capacitors in series with the switches 52 and 54. In operation, as the wheel 18 rotates, a first switch 52 closes and one of the capacitors acquires and holds a charge. As the wheel 18 continues to turn, switch 52 opens and thereafter switch 54 closes. The capacitors will then share the charge acquired by the first capacitor and pass it to the coil 34 which generates the magnetic field when energized. Only when both switches 52 and 54 are closed either simultaneously, as in the case of high speed rotation of the wheel 18, or sequentially closed, as in the case of slow wheel rotation as discussed above, will the coil 34 be energized. Since the capacitors discharge over time, they are sized to maintain their acquired charge for a predetermined period of time corresponding to the minimum desired detectable speed. Although not limiting in the present invention, in one embodiment, the charge pass-on circuit will energize the coil 34 at wheel rotational speeds equivalent to a bicycle velocity as low as 1 mile per hour (1.6 km per hour).

A battery door 56 is positioned within the main body 28 of the mounting device 12 to hold the power source 36, preferably a lithium coin-type battery, in place.

In order to hold the mounting device 12 securely on the hub 16 of the bicycle wheel 18, an elastomeric grommet 58 as shown in Figure 5 is used. The grommet 58 is sized so as to fit within the slot 40 and opening 60 of the assembled mounting device 12. Various sized grommets 58 may be used to accommodate a range of wheel hub sizes. Finger members 62 extend inwardly from the grommet 58 to grip the wheel hub 16. In practice, to install the mounting device 12, the grommet 58 is first positioned around the hub 16. The grommet wall is split so that the grommet 58 could be spread to receive the wheel hub 16. The main body 28 is then slid over the grommet 58 through the slot 40 to position the grommet 58 at the opening 60. The door member 30 is then slid into place to lock the mounting device 12 onto the hub 16.

If desired, an additional locking member 64 can be incorporated into the door member 30 to prevent unwanted removal of the mounting device 12. Although not limited in the present invention, in the particular embodiment illustrated in Figure 3, the locking member 64 includes a lock wing 66, positioned between the wall portions 48 and 50 of the door member 30, secured to a lock shaft 68 and spring washer 70. The width of the lock wing 66 is such that in a first position, the lock wing 66 will fit between extending rib portions 72 (only one shown in Figure 3) within the door member 30 so that the wall portions 48 and 50 of the door member 30 can be biased towards each other to disengage its teeth 44 from mating teeth 46 of the main body 28. When the lock wing 66 is turned 90° by the lock shaft 68, it is positioned such that its body is transverse to the internal ribs 72. In this orientation, the wall portions 48 and 50 cannot be biased toward each other so that the door member 30 cannot be removed from the main body 28 of the mounting device 12.

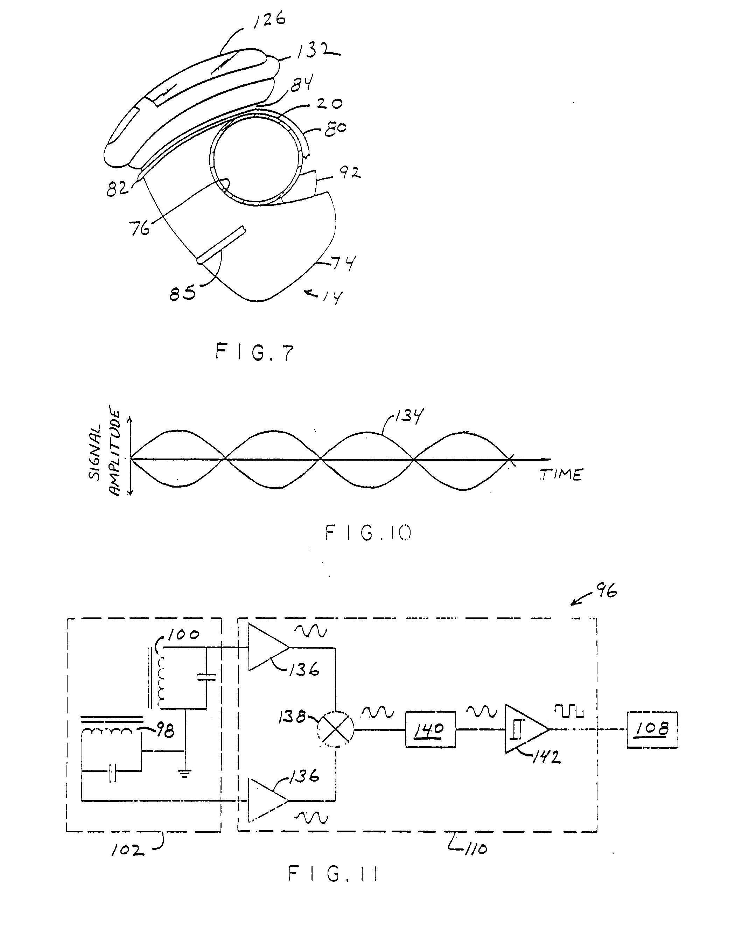

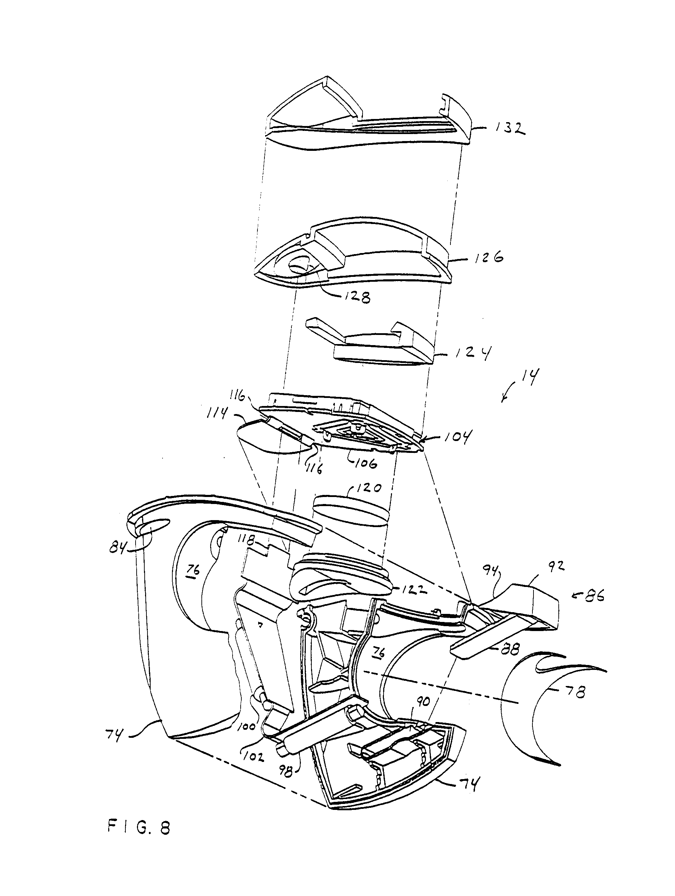

Referring to Figures 6 through 8, the receiver 14 is shown positioned on the handlebar 20 of the bicycle 10 and includes a casing 74 which houses the receiver components. With particular attention to Figure 8, one surface 76 of the receiver 14 has a curvilinear configuration which generally conforms to the curvature of the handlebar 20. Shim members 78 may be positioned along this surface 76 to better fit the receiver 14 with the handlebar 20. An elastic band member 80 (shown only in Figure 7) is used to secure the receiver 14 to the handlebar 20. The band 80 includes an upper loop 82 which fits within groove 84 and extends around the upper portion of the casing 74 and a lower loop 85 which extends over the handlebar 20 and around the lower portion of the casing 74, capturing the handlebar 20 between the band 80 and the casing 74. If desired, a locking arrangement may be used to provide a more permanent mounting of the receiver 14 to the handlebar 20. Although not limiting in the present invention, a lock member 86 includes a toothed slide 88, which is received within an opening 90 in the lower portion of the casing 74, and a head portion 92 which includes a curved surface 94 which generally corresponds to the curvature of the handlebar 20. By inserting the slide 88 into the opening 90 as far as it can go so that the head portion 92 contacts the handlebar 20, the teeth of the slide 88 engage corresponding teeth in the opening 90 and the receiver 14 is held in place on the handlebar 20. To remove locking member 86, an elongated member (not shown) is inserted through an opening (not shown) in casing 74 to bias slide 88 away from the teeth in opening 90 allowing locking member 86 to slide out of the casing 74.

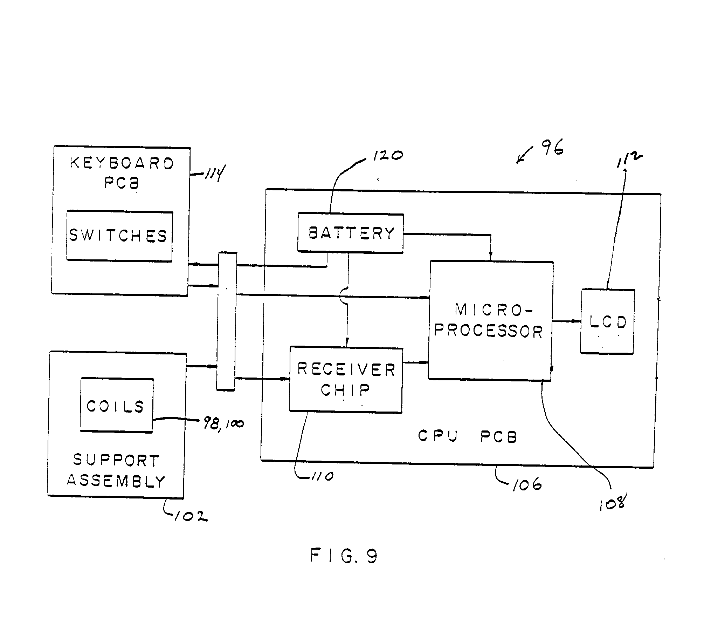

Referring to Figure 9, the receiver 14 includes a receiver circuit 96 that takes the real time rotational data generated by the transmitter and converts it to a digital signal for a microprocessor which, in turn, performs all computation functions and conversions and drives an internally mounted liquid crystal display (LCD). More specifically, although not limiting in the present invention, referring to Figure 8, the receiver circuit 96 of receiver 14 includes a pair of receiver coils 98 and 100 mounted on a flexible printed circuit board support assembly 102 and positioned within the casing 74 as shown in Figure 8. In the embodiment of the invention illustrated in Figure 7, the coils 98 and 100 are oriented 90° relative to each other to sense the rotating magnetic field of the transmitter coil 34 in a manner to be discussed below in more detail. In addition, the coils 98 and 100 are preferably oriented at approximately 45° to horizontal for reasons to be discussed later.

The receiver 14 also includes a unit 104 having a central processing unit (CPU) printed circuit board assembly 106 with a microprocessor 108, a receiver chip 110 (which is part of the receiver circuit 96 as will be discussed later), a liquid crystal display (LCD) 112 driven by the microprocessor 108, and a keyboard printed circuit board 114 to modify the viewed display on the LCD 112. Keyboard PCB 114 makes electrical contact with unit 104 through tabs 116. Although not limiting in the present invention, the LCD 112 is a two parameter display that is driven by a one half bias, duplex drive circuit as is well known in the art, the microprocessor 108 of assembly 106 is a semi-custom, 4-bit, mask program microprocessor such as a Sanyo LC5863 low power CMOS microprocessor and the receiver chip 110 of assembly 106 is a fully custom, low power CMOS integrated circuit. The PCB assembly 106 of unit 104 and support assembly 102 are electrically interconnected through tab 118. A power source 120, such as a lithium coin cell, powers the receiver 14 and is held in place by a removable battery door 122. A bezel 124 frames the LCD 112 and a lens case 126 covers the bezel 124 and unit 104. The lens case 126 includes an integrally molded flexible actuator. Although not limiting in the present invention, in the particular embodiment illustrated in Figure 8, the case 126 includes two molded flexible actuators 128 ( only one shown) each with a post that extends downwardly from the case 126 and contacts one of two corresponding metal dome switches (shown schematically in Figure 9) on the keyboard PCB 114. Actuators 128 control the display functions of the receiver 14, as will be discussed later in more detail. A cover member 132 is fitted over the lens case 126 to enclose the upper portion of the receiver 14 and the actuators 128.

Although not limiting in the present invention, the disks 24 and 26 of the main body 28, door member 30 and casing 74 are preferably an injection molded plastic material.

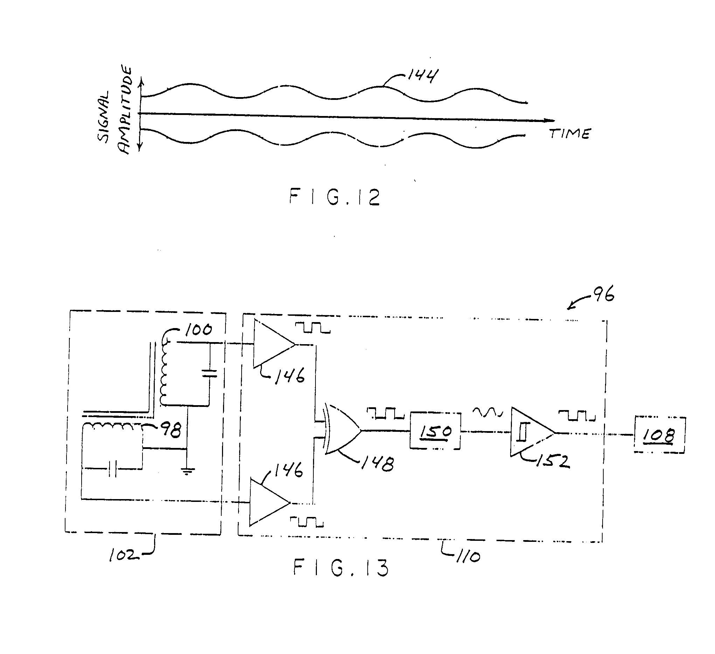

In operation, when the wheel 18 rotates, the transmitter coil 34 is energized and generates a rotating magnetic field which is detected by the receiver 14. More particularly, coils 98 and 100 of the receiver circuit 96 each generate a continuously changing signal in response to the changing magnetic field that passes through the coils. Although not limiting in the present invention, in one embodiment, in order to "tune" the receiver 14, i.e. make the coils 98 and 100 more selective to a particular frequency, a capacitor is selected to amplify a received signal corresponding to the frequency to the transmitter as shown in Figures 11 and 13. Due to the relative orthogonal orientation of the coils 98 and 100, the first receiver coil 98 will have a maximum magnetic field impressed on it from coil 34 while the second receiver coil 100 does not have any field impressed on it and as the wheel 18 continues to turn and the magnetic field from the transmitter coil 34 rotates, the second coil 100 will have a maximum field impressed on it while the first coil 98 does not sense any field. The envelope 134 of the signal generated by each receiver coil 98 and 100 is a sinusoidal signal as shown in Figure 10. Due to the orthogonal mounting arrangement of coils 98 and 100, their respective signal envelopes are 90° out of phase relative to each other. Referring to Figure 11, in one particular embodiment of the invention, these signals pass through a linear amplifier 136 of the receiver circuit 96, which includes the coils 98 and 100 on the support assembly 102 and the receiver chip 110 and associated circuitry on PCB assembly 106, and are multiplied together by an analog multiplier 138. The resulting signal passes through a low pass filter 140. Filtration yields a signal with an amplitude proportional to twice the angular frequency of the wheel mounted transmitter. The filtered waveform is then converted to a digital waveform, i.e. a square wave output, by an amplifier with hysteresis 142, such as a Schmitt trigger. This digital output is then sent to the microprocessor 108.

It was found that when the receiver coils 98 and 100 are in close proximity to each other they become magnetically coupled, i.e. when one coil, for example coil 98 generates a primary signal as a result of the magnetic field impressed on it by the rotating magnetic field of the transmitter, it produces a secondary magnetic field which is impressed on the other coil 100. As a result, a secondary signal is generated by coil 100. Similarly, the primary signal generated by coil 100 resulting from the transmitter field produces a secondary magnetic field which is impressed on the coil 98 and, in turn, produces a secondary signal from coil 98. As a result, the output signal of a receiver coil at any given time is the sum of the primary signal resulting from the rotating magnetic field passing through the coil and the secondary signal resulting from the magnetic field generated by the other receiver coil. The resulting signal envelope 144 is shown in Figure 12. As can be seen, the variation in envelope amplitude, i.e. modulation of the signal, is reduced and the envelope 144 no longer has periods of 0 amplitude. This envelope configuration allows the use of limiting amplifiers and a digital multiplier in the receiving circuit 96 rather than linear amplifiers and an analog multiplier as discussed above. More particularly, referring to Figure 13, each signal is amplified by a limiting amplifier 146 which converts the signal to a square wave output. These waveforms are multiplied together by a digital multiplier 148, which in one embodiment of the invention is an Exclusive OR gate. The resulting signal is filtered by a multi-staged switched capacitor filter 150 which produces a low frequency sinusoidal waveform with an amplitude proportioned to twice the angular frequency of the wheel mounted transmitter. This sinusoidal waveform then passes through an amplifier with hysteresis 152 to produce a square wave output which is sent to the microprocessor 108.

The microprocessor 108 receives the raw data and using previously inputted data that is stored in the microprocessor, e.g. bicycle tire circumference, transforms it into data related to the movement of the bicycle by executing internally stored programs as is well known in the art. Although not limiting in the present invention, in the preferred embodiment the data generated by the programs is based on the number of state changes, i.e. transitions, in the square wave output per unit of time. The cyclist uses the actuators 128 to select which of the available functions is displayed on the LCD 112. In one particular embodiment of the invention, the current velocity is always displayed on the LCD 112 regardless of any secondary function selected by the cyclist (shown as 16.5 MPH on Figure 6). Such secondary functions may include, but are not limited to, average velocity, maximum velocity, current distance, total (cumulative) distance, elapsed time and real time.

The microprocessor 108 may operate in a different computational mode to accommodate specific speed/wheel size combinations. More particularly, with low speed/large wheel combinations, velocity measurements are made by measuring the time between transitions in the square wave output rather than the number of transitions in a given period. This will allow for greater accuracy at low speeds.

The receiver chip 110 of the receiver circuit 96 also produces a carrier detect output signal which is transmitted to the microprocessor 202 to indicate to the microprocessor that the receiver 14 is receiving a reliably detectable signal from the transmitter. When the bicycle 10 is not moving or is moving at such a slow speed that the sequential charge pass-on circuit of rotation detector 38 does not energize the coil 34, the receiver circuit 96 will no longer detect a magnetic field and it will stop generating the carrier detect signal. When the carrier detect signal is not received by the microprocessor 108 for a predetermined time interval after the last detected signal is received, the microprocessor 108, in turn, will power down assemblies 102 and 110 as well as place itself in a low power mode. The microprocessor 108 will continue to momentarily power the receiver circuit 96 and test for a carrier detect signal present on a regular basis. If the carrier detect signal is detected, the microprocessor 108 will power up the assemblies 102 and 110 and they will remain powered as long as receiver circuit 96 continues to detect a signal from the transmitter. The assemblies 102 and 110 are also re-powered immediately upon pressing either of the activators 128. This power shut down feature serves two important features. First, it prolongs battery life by operating the assemblies 102 and 110 only when there is a detectable signal from the transmitter, i.e. when the bicycle 10 is moving. Second, an elapsed time counter and average speed calculations (possible secondary functions) may be suspended when the current velocity equals zero, i.e. when the bicycle wheel 18 is not rotating for longer than a predetermined time interval. This will allow accurate training data to be acquired even when the cyclist is forced to stop for traffic lights or scheduled rest periods.

The wireless connection between the transmitter and the receiver 14 is designed so that it will not interfere with other bicycle computers of the same or different type located outside a one half meter radius of the transmitter. More particularly, magnetic field strength is inversely proportional to the cube of the distance between the transmitter and the receiver 14. In one embodiment of the invention, the output from the receiver circuit 96 to the microprocessor 108 is a square wave that has been processed to remove undesired interfering signals and "lock onto" the stronger signal generated by the rotating transmitter.

As stated earlier, in one embodiment of the invention, the receiver 14 includes two orthogonal coils that are oriented at 45° to the horizontal. However, other receiver configurations may be used. For example, a single coil may be used to receive the signal from the rotating magnetic field; however, this is not preferred because a single coil can generate only a single signal. With two coils, there is better accuracy because the receiver is receiving twice as many signals. In addition, with a single coil the velocity, distance and other bicycle information to be calculated by the microprocessor 108 will be based on the amplitude variation of the single signal which, in turn, is based on the variations in the magnetic field strength. Because this type of arrangement depends on signal strength, and more particularly the absolute amplitude of the signal, the minimum required signal strength is higher. With the preferred two coil configuration, the absolute amplitude of each signal is irrelevant since it is the multiplied and filtered signal that are being used by the microprocessor 108 to generate the relevant bicycle information. Using the multiplied and filtered signal, the receiver can extract the angular velocity of the transmitter (and the wheel) with the output signal being twice the angular frequency of the transmitter.

In addition, the coils 98 and 100 do not have to be at 90° relative to each other; however the 90° orientation provides the maximum values when the signals are multiplied together as discussed earlier.

In one embodiment of the invention, coils 98 and 100 are oriented relative to the horizontal such that the longitudinal axis of - the transmitter coil 34, when aligned with the receiver 14, bisects the angle between the receiver coils 98 and 100. As a result, the maximum signal strength impressed on each receiver coil as the transmitter coil 34 rotates about hub 16 is the same and variations in the amplitude of the signal envelope are minimized, producing highest sensitivity and best interference rejection. As can be seen, when the transmitter coil 34 is positioned directly below the receiver 14, an orientation of coil 98 and 100 of approximately 45° relative to the horizontal provides optimal sensitivity in detecting the magnetic field generated by coil 34. It is obvious that as the transmitter and receiver 14 move further apart with respect to their vertical alignment, this optimal angle will change; however it is believed that the 45° orientation, on the average, provides a reliable arrangement for acceptable performance of the receiver 14.

Based on the above, it would be obvious to one skilled in the art that more than two coils may be used and the coils may be positioned at various orientations to receive the transmitter signal and convert it into useful information for the cyclist.

It should be appreciated that the present invention can be combined with pulse signal generators, as are well known in the art, to monitor other functions simultaneously with the bicycle velocity, e.g. crank rotation. Referring to Figure 1, a signal generator (not shown) can be positioned on the crank 154 and bicycle frame 156, for example as disclosed in U.S. Patent Nos. 4,636,769 to Tsuyama and 4,780,864 to Houlihan, to generate an AM burst signal each time the crank 154 passes a set position on the frame 156. This signal will be detected by the receiver coils 98 and 100 and characterized by the receiver circuit 96 as a "spike" which can be separated from the transmitter signal. This type of arrangement may also be used to detect heart rate from a wireless transmitter which is attached to the cyclist and transmits an AM burst signal in response to the cyclist's heart beat.

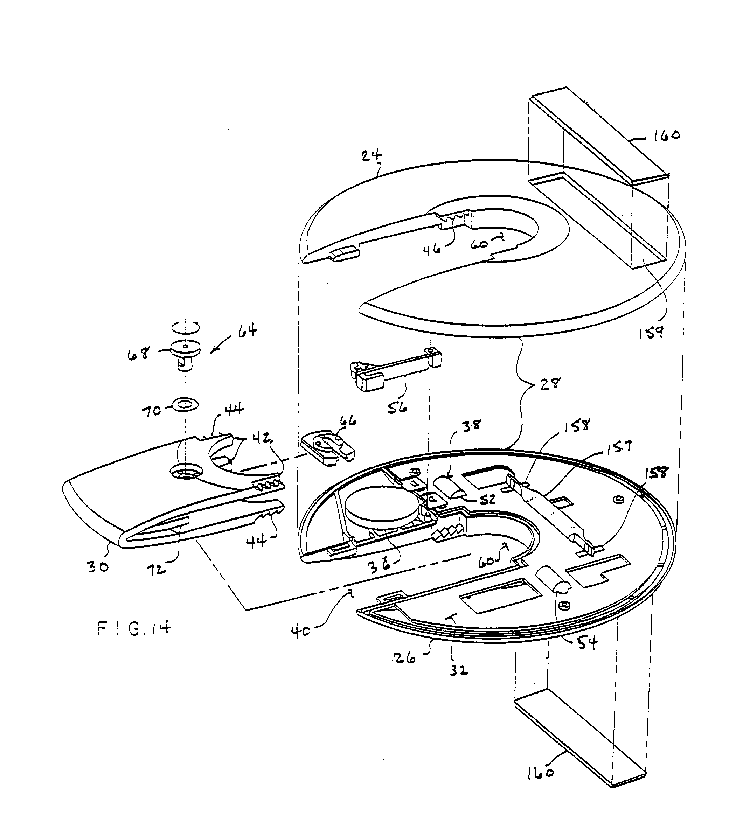

As previously mentioned, the mounting device 12 may be used without a receiver 14 to attach a variety of different types of accessories about the hub of the bicycle wheel 18. These accessories may be strictly for ornamentation or may generate a signal as the wheel 18 rotates. Although not limiting in the present invention, in the particular embodiment illustrated in Figure 14, the mounting device 12 houses a light that is activated as the wheel rotates, as will discussed later in more detail. The main body 28 houses a printed circuit board (PCB) assembly 32, a bulb 157, a power source 36 and a wheel rotation detector 38 which energizes the bulb 157 when the wheel 18 rotates, as will be discussed later in more detail. Bulb 157 is electrically interconnected with PCB assembly 32 and held in place by electroconductive clips 158. It would be obvious to one skilled in the art to use other bulb configurations, e.g. screw-in type bulbs or multiple bulbs. Openings 159 (only one shown in Figure 14) in members 24 and 26 allow the bulb 157 to be seen when illuminated and lens covers 160 are fitted in a corresponding opening 159 protect the bulb 157. One or both of the lens covers 160 are removable so that the bulb 157 can be replaced. A battery door 56 is positioned within the main body 28 of the device 12 to hold the power source 36, preferably a lithium coin-type battery, in place.

The light arrangement housed by mounting device 12 operates by energizing the bulb 157 as the wheel 18 rotates and achieves long battery life by energizing the bulb 157 only when the wheel 18 is turning. More specifically, in the particular embodiment illustrated in Figure 14, the rotation detector 38 includes a pair of mercury switches 52 and 54 positioned 180° relative to each other about the rotational axis of the wheel 18. The mercury switches are electrically interconnected to the bulb 157 and power source 36 through PCB assembly 32 such that when the device 12 is not rotating, as would be the case when the bicycle 10 is not moving, at least one of the mercury switches is open and no current passes from the power source 36 through the bulb 157. As the bicycle 10 begins to move and the wheels rotate, centrifugal force will cause the mercury in each of the switches to move outward, thus closing the circuit and allowing current to pass from the power source 36 through the bulb 157. Although not required, to accommodate the operating condition when the bicycle 10 is moving at such a slow speed that both switches 52 and 54 are not simultaneously closed, the switches 52 and 54 may be incorporated into a sequential charge pass-on circuit, as is well known in the art. Although not limiting in the present invention, in one particular embodiment, the pass-on circuit includes a pair of capacitors (not shown) in series with the switches 52 and 54. In operation, as the wheel 18 rotates, a first switch 52 closes and one of the capacitors acquires and holds a charge. As the wheel 18 continues to turn, switch 52 opens and thereafter switch 54 closes. The capacitors will then share the charge acquired by the first capacitor and pass it to the bulb 157. Only when both switches 52 and 54 are closed either simultaneously, as in the case of high speed rotation of the wheel 18, or sequentially closed, as in the case of slow wheel rotation as discussed above, will the bulb 157 be energized. Since the capacitors discharge over time, they are sized to maintain their acquired charge for a predetermined period of time corresponding to the minimum desired detectable speed. Although not limiting in the present invention, in one particular embodiment, the charge pass-on circuit will energize the bulb 157 at wheel rotational speeds equivalent to a bicycle velocity as low as 1 mile per hour (1.6 km per hour).

As an alternative to the bulb energizing arrangement disclosed above, the mounting device may include a switch (not shown) to turn the light on and off regardless of whether or not the wheel is rotating.

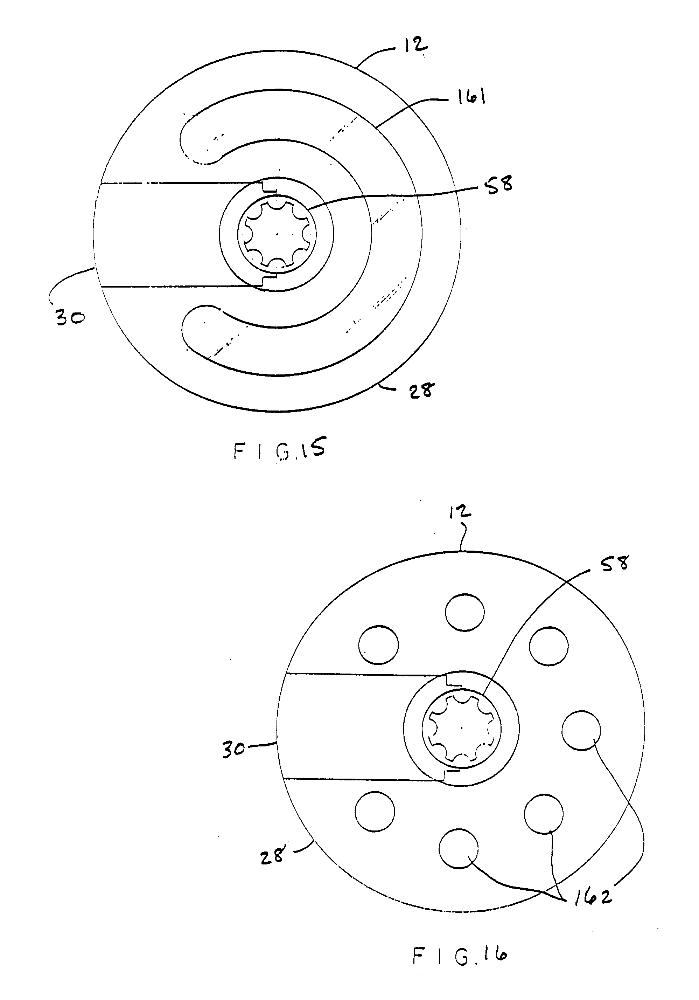

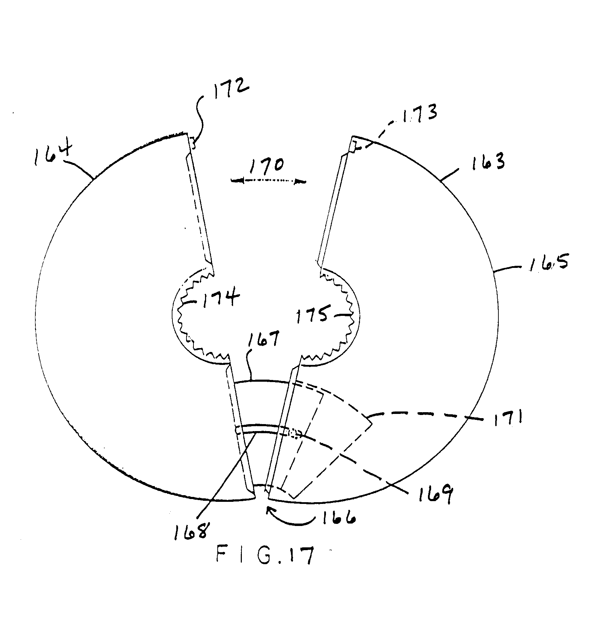

The mounting device 12 may be used in combination with other signal generating accessories. In addition, the device 12 may also include a reflector 161 on the main body 28 as shown in Figure 15 so that the reflector rotates with the wheel 18. In still another embodiment of the invention, openings 162 may be provided on or through the main body 28 as shown in Figure 16 with the openings 162 configured and shaped such that as the wheel 18 and main body 28 rotates, the device 12 emits a whistling sound. In the latter two embodiments of the invention, since no additional components are positioned within the device 12, main body 28 may be a one piece member rather than a two piece member as discussed above, and furthermore may be solid.

Figure 17 illustrates an alternate embodiment of the mounting device 12. Device 163 includes two sections 164 and 165 which are interconnected by sliding and pivoting arrangement 166. Slide 167 extends from section 164 and includes a slot 168 through which post 169 of section 165 extends. As sections 164 and 165 move relative to each other as indicated by arrow 170, slide 167 moves into and out from receiver 171, guided by slot 168 along post 169 and receiver 171. Projection 172 extends from section 164 and is received within an opening 173 in section 165 when the mounting device 163 is in a closed position. Although not limiting in the present invention, projection 172 may include a toothed arrangement (not shown) which engages complementing teeth within opening 173 to secure the device 163 in a closed position. In the preferred embodiment of the invention, a grommet (not shown in Figure 17) such as that discussed earlier may be used to ensure snug engagement between the device 163 and the hub of a wheel. However, if desired, resilient members 174 and 175 may be secured directly to the sections 164 and 165, respectively, as shown in Figure 17 to secure the device 163 to a wheel hub.

Based on the teachings of the present invention, it is obvious that other mounting configurations may be used to provide the quick installation mounting devices as taught herein. For example, although Figure 3 shows a configuration wherein the sides of the slot 40 are parallel to each other allowing door 30 to slide within slot 40 in the main body 28, the sides of the slot may also be angularly offset relative to each other. The size and shape of the door 30 would change accordingly. It is contemplated that the size of the door 30 can be increased until the body 28 and door 30 are the same size and configuration, i.e. semi-circular. In addition, other engaging and locking arrangements as are well known in the art may be used in place of those discussed above.

The forms of this invention shown and described in this disclosure represent illustrative preferred embodiments and various modifications thereof. It is understood that various changes may be made without departing from the scope of the invention as defined by the claimed subject matter which follows.

**Claims**

1. A mounting device for mounting on a rotating shaft comprising:

   a first member extending about a portion of a shaft on which said device is to be mounted;

   a second member extending about the remaining portion of said shaft;

   means to secure said first and second members together, wherein said first and second members define a central opening sized to receive said shaft; and

   means to engage said shaft with said first and second members such that there will be no relative rotational movement therebetween.

2. The device as in claim 1 wherein said second member includes spaced apart, opposing resilient wall members capable of being biased towards each other and said securing means includes teeth engaging members positioned on said second member engageable with complementing teeth members on said first member.

3. The device as in claim 1 further including means to transmit a signal from at least one of said first and second members.

4. The device as in claim 3 wherein said signal is audible.

5. The device as in claim 3 wherein said signal is electromagnetic.

6. The device as in claim 5 wherein said signal transmitting means further includes a power source and at least one coil.

7. The device as in claim 3 wherein said signal is visual.

8. The device as in claim 7 wherein said signal transmitting means further includes a power source, a light and means to energize said light as said shaft rotates.

9. The device as in claim 7 wherein said visual signal is reflected light.

10. A system for measuring and displaying information related to the rotation of a shaft, comprising:

    transmitter means secured to a rotating shaft, including means to generate a magnetic field which rotates with said shaft;

    receiver means positioned at a location removed and electrically isolated from said transmitter means, including means to sense variations in said rotating magnetic field and generate signals in response to said variations;

means to convert said signals into selected data related to said shaft rotation; and

means to display selected portions of said data.

11. The system as in claim 10 wherein said transmitter means is secured to said rotating shaft by the device of claim 1.

12. The system as in claim 10 wherein said generating means includes a transmitter coil oriented along a longitudinal axis generally parallel to a plane of rotation of said wheel.

13. The system as in claim 12 further including means to automatically energize said transmitter coil when said wheel is rotating.

14. The system as in claim 10 wherein said receiver means includes at least two coils oriented at a predetermined angle relative to each other and positioned on said bicycle such that said rotating magnetic field passes through each of said coils, wherein said coils generate signals whose strength is proportional to the strength of said magnetic field sensed by said coils.

15. The system as in claim 14 wherein said receiver coils each lie in planes generally parallel to said plane of rotation of said wheel.

16. The system as in claim 14 wherein said receiver coils lie in a common plane and are oriented approximately 90° relative to each other.

17. The system as in claim 10 wherein said receiving means further includes a microprocessor to receive said signals from said receiving coils and perform computations and conversions required to generate said selected data.

18. A method of measuring information related to the rotation of a shaft, comprising;

generating a magnetic field in response to rotation of a shaft;

rotating said magnetic field at a rate proportional to the rotation of said shaft;

sensing variations in the strength of said magnetic field at a location removed and electrically insulated from said shaft;

generating signals in response to said field variations;

converting said signals into selected data related to said rotation of said shaft; and

displaying selected portions of said data.

19. The method as in claim 18 further including the step of securing said field generator to the device of claim 1 and securing said device to said shaft.

20. The method as in claim 18 wherein said sensing step includes positioning at least two coils oriented at a predetermined angle relative to each other at said receiver in a manner such that said rotating magnetic field passes through each of said coils, wherein said coils generate signals whose strength is proportional to the strength of said field passing through said coils.

FIG. 1

FIG. 2

FIG. 3

| BATTERY | → | ROTATION DETECTOR | → | PCB WITH LC OSCILLATOR |
|---------|---|-------------------|---|------------------------|
| 36 | | 38 | | 32,34 |

F I G. 4

F I G. 5

F I G. 6

F I G. 7

F I G. 10

F I G. 11

FIG. 8

FIG. 9

F I G . 12

F I G . 13

FIG.14

F I G. 15

F I G. 16

F I G. 17